# EUROPEAN PATENT SPECIFICATION

(11) **EP 3 537 800 B1**
(45) Date of publication and mention of the grant of the patent: **27.10.2021**
(21) Application number: 17867643.3
(22) Date of filing: 22.08.2017
(51) Int. Cl.: H04L 5/00, H04W 16/28, H04W 48/08, H04W 92/20, H04B 7/06

(54) **USER DEVICE, BASE STATION AND REFERENCE SIGNAL TRANSMISSION METHOD**
BENUTZERVORRICHTUNG, BASISSTATION UND REFERENZSIGNALÜBERTRAGUNGSVERFAHREN
DISPOSITIF UTILISATEUR, STATION DE BASE ET PROCÉDÉ DE TRANSMISSION DE SIGNAL DE RÉFÉRENCE

(30) Priority: 02.11.2016 JP 2016215703
(43) Date of publication of application: 11.09.2019
(73) Proprietor: NTT DOCOMO, INC., Chiyoda-ku Tokyo 100-6150 (JP)
(72) Inventor: MOROGA, Hideyuki, Tokyo 100-6150 (JP); TAKEDA, Kazuaki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/029904
(87) International publication number: WO 2018/083861

(56) References cited:
- EP-A1- 2 627 145
- WO-A1-2013/183542
- JP-A- 2016 518 058
- JP-A- 2017 188 716
- US-A1- 2016 242 038
- US-A1- 2016 242 038
- HUAWEI ET AL: "Principles for Reference Signal Design and QCL Assumptions for NR", 3GPP DRAFT; R1-167224, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140589, Retrieved from the Internet: URL:http://www.3gpp.org/ftp/Meetings_3GPP_ SYNC/RAN1/Docs/ [retrieved on 2016-08-21]
- HUAWEI ET AL: "Reference Signal design for UL based measurement, CSI acquisition, and beam management", 3GPP DRAFT; R1-1609413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149456, Retrieved from the Internet: URL:http://www.3gpp.org/ftp/Meetings_3GPP_ SYNC/RAN1/Docs/ [retrieved on 2016-10-09]
- NOKIA ET AL: "UL SRS design considerations in NR", 3GPP DRAFT; R1-1610273, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150290, Retrieved from the Internet: URL:http://www.3gpp.org/ftp/Meetings_3GPP_ SYNC/RAN1/Docs/ [retrieved on 2016-10-09]
- QUALCOMM INCORPORATED: "UL reference signal design for eMBB with CP-OFDM and DFT-s-OFDM", 3GPP DRAFT; R1-1610115_UL REFERENCE SIGNAL DESIGN FOR EMBB WITH CP-OFDM AND DFT-S-OFDM, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG1, no. Lisbon, Portugal; 20161010 - 20161014 9 October 2016 (2016-10-09), XP051150139, Retrieved from the Internet: URL:http://www.3gpp.org/ftp/Meetings_3GPP_ SYNC/RAN1/Docs/ [retrieved on 2016-10-09]
- SONY CORPORATION: "Intel-cell SRS coordination", 3GPP DRAFT; R1-155619, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmo, Sweden; 20151005 - 20151009 4 October 2015 (2015-10-04), XP051002483, Retrieved from the Internet: URL:http://www.3gpp.org/ftp/Meetings_3GPP_ SYNC/RAN1/Docs/ [retrieved on 2015-10-04]
- HUAWEI ET AL.: 'Reference signal design for UL based measurement , CSI acquisition , and beam management' 3GPP TSG-RAN WG1#86B R1-1609413, [Online] 09 October 2016, XP051149456 Retrieved from the Internet: <URL:http://www.3gpp.org/ftp/tsg_ran/WG1_RL 1/TSGR1 _86b/Docs/R1-1609413.zip>
- ERICSSON: 'Technology components for unlicensed operation' 3GPP TSG-RAN WG1#86B R1-1609638, [Online] 09 October 2016, page 2/3, XP051149674 Retrieved from the Internet: <URL:http://www.3gpp.org/ftp/tsg_ran/WG1_RL 1/TSGR1 _86b/Docs/R1-1609638.zip>
- NOKIA ET AL.: 'UL SRS design considerations in NR' 3GPP TSG-RAN WG1#86B R1-1610273, [Online] 09 October 2016, XP051150290 Retrieved from the Internet: <URL:http://www.3gpp.org/ftp/tsg_ran/WG1_RL 1/TSGR1 _86b/Docs/R1-1610273.zip>
- ALCATEL -LUCENT SHANGHAI BELL ET AL.: 'Enhancements of DMRS and demodulation for V2V' 3 GPP TSG-RAN WG1#83 R1-156977, [Online] 15 November 2015, page 6/11, XP051003293 Retrieved from the Internet: <URL:http://www.3gpp.org/ftp/tsg_ran/WG1_RL 1/TSGR1_83/D ocs/R1-156977.zip>
- HUAWEI ET AL.: 'Principles for reference signal design and QCL assumptions for NR' 3GPP TSG-RAN WG1#86 R1-167224, [Online] 21 August 2016, XP051140589 Retrieved from the Internet: <URL:http://www.3gpp.org/ftp/tsg_ran/WG1_RL 1/TSGR1 _86/Docs/R1-167224.zip>
- SONY CORPORATION: 'Intel-cell SRS coordination' 3GPP TSG-RAN WG1#82B R1-155619, [Online] 04 October 2015, XP051002483 Retrieved from the Internet: <URL:http://www.3gpp.org/ftp/tsg_ran/WG1_RL 1/TSGR1 _82b/Docs/R1-155619.zip>

## Description

### TECHNICAL FIELD

The present invention relates to user equipment, a base station, and a reference signal transmission method.

### BACKGROUND ART

In long term evolution (LTE), a study of a radio communication scheme called a fifth generation (5G) is in progress so as to achieve a further increase in system capacity, a further increase in a data transmission speed, further reduction of latency in a radio section, etc. In 5G, studies of various radio technologies are in progress so as to meet a required condition in which latency of a radio section is reduced to be less than or equal to 1 ms, while achieving a throughput of 10 Gbps or greater. In 5G, it is highly likely that a radio technology different from LTE is adopted. Accordingly, in 3rd generation partnership project (3GPP), a radio network, which supports 5G, is referred to as a new radio network (NR: New Radio access network) for distinguishing from a radio network that supports LTE.

### Prior Art Document

### [Non-Patent Documents]

Non-Patent Document 1: NTT DOCOMO, Inc., NTT DOCOMO technical journal "5G radio access technology", January, 2016.

Huawei et al: "Principles for Reference Signal Design and QCL Assumptions for NR", August 21, 2016 relates to design options for 5G NR RS for minimizing the always-on signal, maintaining the QCL assumption and for supporting high frequency band.

Huawei et al: "Reference Signal design for UL based measurement, CSI acquisition, and beam management", October 9, 2016 relates to reference signal design for UL based measurement, CSI acquisition, and beam management. In particular, uplink RS should adapt to the UE state, e.g., Active state and RAN Controlled state.

Nokia et al: "UL SRS design considerations in NR", October 9, 2016 relates to considerations on Sounding Reference Signal (SRS) design. In particular, the document discusses the challenges of existed SRS and some design principles for SRS in NR.

Qualcomm incorporated: "UL reference signal design for eMBB with CP-OFDM and DFT-s-OFDM", October 9, 2016 relates to comparing different options for NR symmetric RS design for DL and UL.

### [Patent Documents]

EP 2 627 145 A1 relates to a radio base station apparatus that reports SRS transmission control information to a mobile terminal apparatus and controls transmission of an SRS by the mobile terminal apparatus, and the radio base station apparatus has an SRS setting section that selects bit information to report to the mobile terminal apparatus, from a table having bit information to indicate not to trigger the SRS and bit information to indicate to trigger the SRS using a default SRS parameter, and a reporting section that reports the bit information for the mobile terminal apparatus using a downlink control channel.

US 2016/242038 A1 relates to a method of receiving information defining a PUCCH pattern to be used by a first UE to transmit a PUCCH to a first base station. In response to PUCCH regions overlapping downlink regions in a downlink bandwidth to be used by a second BS for a downlink transmission to a second UE, performing the downlink transmission from the second BS to the second UE.

### SUMMARY OF THE INVENTION

### [PROBLEM TO BE SOLVED BY THE INVENTION]

Currently, in 5G, it is studied to use an access scheme that uses orthogonal frequency-division multiplexing (OFDM) in a waveform, and an access scheme that uses Discrete Fourier Transform-Spread-OFDM (DFT-s-OFDM) in a waveform in combination in an uplink (UL). OFDM has characteristics in which it is possible to achieve an SN ratio and a high throughput. In contrast, DFT-s-OFDM has characteristics in which it is possible to suppress a peak-to-average power ratio (PAPR) to a low ratio, and it is possible to achieve wide coverage. In 5G, it has been studied to use these access schemes while switching these access schemes so as to achieve a further increase in system capacity, a further increase in a data transmission speed, and coverage securement.

Here, in LTE, in order to allow measurement of a propagation loss (path loss (PL)), channel quality, and the like of the UL to be performed on a base station side, a sounding reference signal (SRS) is transmitted from user equipment periodically or in response to a specific trigger. However, it is considered that the same mechanism is also necessary in 5G.

The OFDM divides a frequency band into a plurality of narrow frequency bands (sub-carriers), and transmits data in a state of being mapped onto each frequency band. Accordingly, the OFDM is referred to as multi-carrier transmission. In contrast, the DFT-s-OFDM divides a frequency band, and transmits data by using frequency bands that are different among a plurality of terminals. Accordingly, the DFT-s-OFDM is referred to as single-carrier transmission. When the OFDM is used, it is possible to transmit a UL reference signal with any sub-carrier. However, when the DFT-s-OFDM is used, there is restriction that it is not possible to transmit the UL reference signal with any sub-carrier, and the reference signal can be transmitted only with one continuous sub-carrier (or an equal-interval sub-carrier). Accordingly, in 5G, it is considered that a mechanism, which appropriately controls a resource position at which the UL reference signal is transmitted, is required for using the OFDM and for using the DFT-s-OFDM.

In addition, in 5G, for using a frequency that is higher compared to LTE, it has been studied to perform beam forming, which uses a plurality of narrow beams so as to secure coverage. Accordingly, it is considered to be preferable for the UL reference signal to have a configuration suitable for the beam forming.

The disclosed technology has been developed in consideration of the above-described circumstances, and an object is to provide a technology for allowing transmission of a reference signal, which is suitable for a waveform to be used in UL.

### [MEANS FOR SOLVING THE PROBLEM]

The object of the invention is achieved by the subject-matter of the independent claims. Further examples are provided for facilitating the understanding of the invention. According to the disclosed technology, there is provided user equipment of a radio communication system including a base station and the user equipment, the user equipment including a creation unit that creates an uplink reference signal in accordance with a predetermined uplink reference signal configuration that is reported from the base station or a predetermined uplink reference signal configuration that is defined in a specification; and a transmission unit that transmits the created uplink reference signal, wherein, in the predetermined uplink reference configuration, frequency resources for transmitting the uplink reference signal are discretely mapped in a frequency direction in one symbol within a predetermined time domain.

### [ADVANTAGE OF THE INVENTION]

According to the disclosed technology, it is possible to provide a technique for allowing transmission of a reference signal suitable for a waveform to be used in UL.

### BRIEF DESCRIPTION OF DRAWINGS

Fig. 1 is a diagram illustrating a configuration example of a radio communication system according to an embodiment;
Fig. 2 is a sequence diagram illustrating an example of a procedure that is performed by the radio communication system according to the embodiment;
Fig. 3 is a diagram illustrating an example of an SRS configuration (Configuration 1);
Fig. 4 is a diagram illustrating an example of an SRS configuration (Configuration 2);
Fig. 5 is a diagram illustrating an example of an SRS configuration (Configuration 3);
Fig. 6A is a diagram illustrating an example of an SRS configuration (Configuration 4);
Fig. 6B is a diagram illustrating another example of an SRS configuration (Configuration 4);
Fig. 7 is a diagram illustrating an example of an SRS configuration (Configuration 5);
Fig. 8 is a diagram illustrating an example of an SRS configuration (Configuration 6);
Fig. 9 is a sequence diagram illustrating an example of a procedure of determining the SRS configuration on the basis of a DL reference signal configuration of an adjacent cell;
Fig. 10 is a diagram illustrating an example of a functional configuration of a base station according to the embodiment;
Fig. 11 is a diagram illustrating an example of a functional configuration of user equipment according to the embodiment; and
Fig. 12 is a diagram illustrating an example of a hardware configuration of the base station and the user equipment according to the embodiment.

### [EMBODIMENTS OF THE INVENTION]

In the following, embodiments of the invention are described by referring to the accompanying drawings. Note that the following embodiments are merely examples, and embodiments to which the invention is applied are not limited to the following embodiments. For example, in a radio communication system according to the embodiments, a system based on a scheme conforming to LTE is assumed. However, the present invention is not limited to LTE and can be applied to another scheme. Note that, in this specification and claims, "LTE" is used in broad meaning including, not only a communication scheme corresponding to Release 8 or 9 of 3GPP, but also Release 10, 11, 12, 13, or a fifth generation (5G) communication scheme corresponding to Release 14 or a subsequent Release.

In the following description, a term of "sub-frame" is not intended to be limited to the same time length as "sub-frame (1 msec)" that is defined in current LTE, and includes a time length that is defined in 5G.

### <System Configuration>

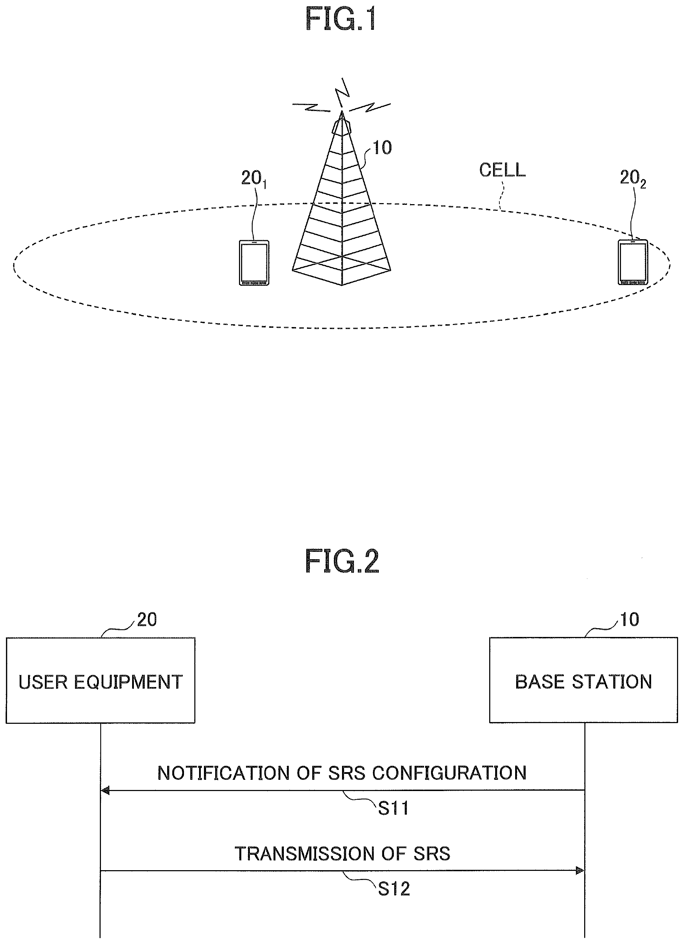

Fig. 1 is a diagram illustrating a configuration example of the radio communication system according to the embodiment. As illustrated in Fig. 1, the radio communication system according to the embodiment includes a base station 10, and units of user equipment (UE) 20₁ and 20₂. In the example of Fig. 1, one base station 10, and two units of user equipment 20₁ and 20₂ (collectively referred to as "user equipment 20") are illustrated. However, a plurality of the base stations 10 may be provided, and one or three or more units of user equipment 20 may be provided.

Examples of the user equipment 20 includes a terminal (mobile broad band terminal (MBB)) such as a smartphone that frequently transmits and receives a large amount of data, a terminal (machine type communication (MTC) terminal such as an Internet of Things (IoT) device that transmits and receives a small amount of data at a low frequency, and the like. In this embodiment, examples of the user equipment 20 include all types (UE categories) of units of user equipment 20.

The base station 10 accommodates one or more cells, and performs a communication with the user equipment 20 through a radio bearer that is established between the base station 10 and the user equipment 20. The base station 10 may be referred to as "enhanced NodeB (eNB)", "New Radio (NR) node", "Next Generaton NodeB (gNB)", "evolution LTE enhanced NodeB (eLTE eNB)", etc.

Each of the base station 10 and the user equipment 20 supports the entirety of an access mode that uses OFDM (may be referred to as cyclic prefix (CP)-OFDM) in a waveform of a UL signal, and an access mode that uses DFT-s-OFDM in the waveform of the UL signal. The user equipment 20 performs transmission of the UL signal by using any one of OFDM and DFT-s-OFDM on the basis of an instruction from the base station 10, or on the basis of a state of the user equipment 20, and the like.

Furthermore, the access mode in which DFT-s-OFDM is used in a waveform is also be referred to as single carrier-frequency division multiple access (SC-FDMA). In addition, the access mode that uses OFDM in a waveform is also referred to as orthogonal frequency-division multiple access (OFDMA) Accordingly, in the following description, "case of using OFDM in a waveform", "case of using OFDM", and the like may be substituted with "case of using OFDMA". Similarly, "case of using DFT-s-OFDM in a waveform", "case of using DFT-s-OFDM", and the like may be substituted with "case of using SC-FDMA".

In LTE of the related art, as an uplink reference signal, an SRS that is used to perform measurement of a propagation loss, channel quality, and the like of the UL on a base station 10 side, and a demodulation-reference signal (DM-RS) that is used to perform channel estimation of the UL are defined. In this embodiment, the base station 10 can give an instruction of an SRS configuration to be applied to the user equipment 20 on the basis of a waveform that is applied to the UL, and the like, and the user equipment 20 transmits the SRS in accordance with the SRS configuration that is given in the instruction.

Furthermore, the term of "SRS" that is used in the following description is not intended to be limited thereto. In 5G, the term of "SRS" is used to include a reference signal that is newly defined as a reference signal that is used to perform measurement of the propagation loss, the channel quality, and the like of the UL on the base station 10 side.

### <Procedure>

Fig. 2 is a sequence diagram illustrating an example of a procedure that is performed by the radio communication system according to the embodiment.

In step S11, the base station 10 determines a radio resource position (SRS configuration) that is used in transmission of the UL reference signal, and notifies (sets) the user equipment 20 of the radio resource position. The radio resource position (SRS configuration) that is given in notification includes a position of a frequency resource and a position of a time resource (for example, a position of a sub-frame, a transmission period, and the like). In addition, the base station 10 may give a notification (may set) phase rotation (circulation shift) of SRS series in addition to the SRS configuration. In addition, the SRS configuration may be given (set) in notification to the user equipment 20 by using index values indicating patterns of a plurality of radio resource which are determined in advance.

The SRS configuration may be given (set) in notification to the user equipment 20 in a state of including an RRC connection setup message, an Radio Resource Control (RRC) connection resetting message, an S1 connection setting message, or a Physical Downlink Control Channel (PDCCH) Downlink Control Information (DCI).

In addition, the SRS configuration may be given (set) in notification to the user equipment 20 by using Master Information Block (MIB), System Information Block (SIB), Message 2 in a random access procedure, or paging information. In this case, the base station 10 may notify (set) the user equipment 20 of only information (for example, a symbol position at which the SRS is transmitted, and the like), which is to be commonly set to the user equipment 20, in the SRS configuration by using the MIB, the SIB, Message 2 in the random access procedure, or the paging information, and may notify (set) the user equipment 20 of information (a specific resource position at which the SRS is to be transmitted, and the like), which is to be individually set to the user equipment 20, in a state of being included in the RRC connection setup message, the RRC connection resetting message, the S1 connection setting message, or the PDCCH (DCI).

In addition, the SRS configuration may be defined in accordance with specifications. In this case, step S11 in Fig. 2 is omitted.

In step S12, the user equipment 20 transmits the SRS in accordance with the SRS configuration that is given (set) in notification from the base station 10 or the SRS configuration that is defined in accordance with the specifications.

### <Specific Example of SRS Configuration)>

Next, description will be given of a plurality of specific example with respect to the SRS configuration.

### (SRS Configuration (Configuration 1))

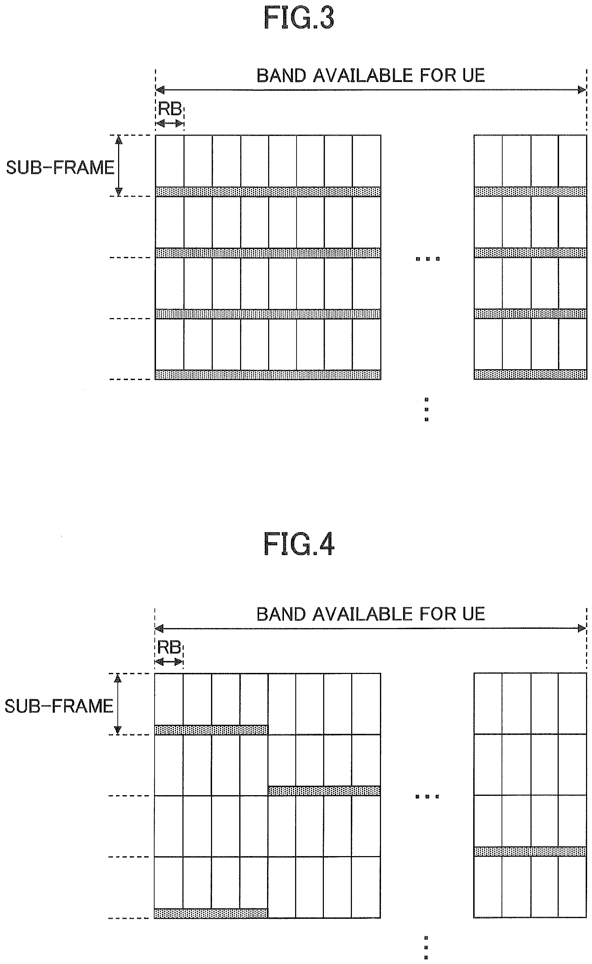

Fig. 3 is a diagram illustrating an example of the SRS configuration (Configuration 1). The SRS configuration (Configuration 1) is a configuration in which in one specific symbol in a sub-frame, the SRS is transmitted in the whole RB (resource block) range available for the user equipment 20. The whole RB range available for the user equipment 20 represents one of a frequency range capable of transmitting the SRS in a range of UE capability of the user equipment 20 or a frequency range that is given in instruction from the base station 10 in a channel band (this is also true of another SRS configuration).

The one specific symbol may be the last symbol, the first symbol, or an intermediate symbol. Fig. 3 illustrates an example in which the SRS is mapped to the last symbol. In addition, the SRS may be transmitted with the entirety of resource elements or comb-like resource elements (resource elements which are arranged in parallel at even intervals) in the whole RB range available for the user equipment 20.

When using the SRS configuration (Configuration 1), the base station 10 can perform measurement of the channel quality and the like in the entirety of bands of a channel band.

### (SRS Configuration (Configuration 2))

Fig. 4 is a diagram illustrating an example of the SRS configuration (Configuration 2). The SRS configuration (Configuration 2) is a configuration in which in one specific symbol in a sub-frame, the SRS is mapped to a partial RB in the whole RB range available for the user equipment 20, and an RB position that is mapped is subjected to frequency hopping in accordance with a hopping rule that is determined in advance for each time.

The one specific symbol may be the last symbol, the first symbol, or an intermediate symbol. In addition, the SRS may be transmitted with the entirety of resource elements or comb-like resource elements (for example, a predetermined resource element interval, and the like) in the partial RB to which the SRS is mapped at certain time.

When using the SRS configuration (Configuration 2), the number of RBs with which the SRS is transmitted in certain time is limited, and thus it is possible to secure a transmission power density of the user equipment 20.

### (SRS Configuration (Configuration 3))

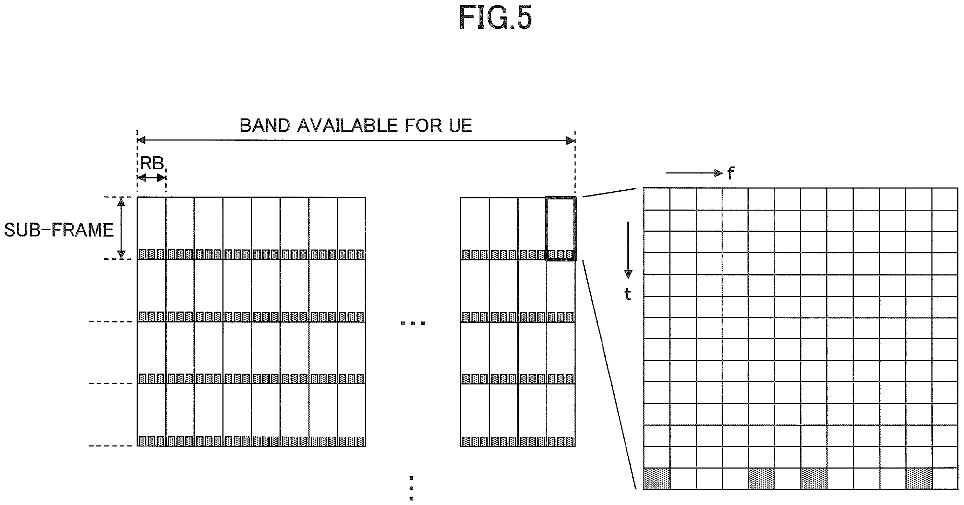

Fig. 5 is a diagram illustrating an example of the SRS configuration (Configuration 3). The SRS configuration (Configuration 3) is a configuration in which in one specific symbol in a sub-frame, the SRS is discretely transmitted in the whole RB range available for the user equipment 20.

The one specific symbol may be the last symbol, the first symbol, or an intermediate symbol. Furthermore, the discrete transmission is intended to represent that the SRS is not transmitted with resource elements which are arranged in parallel at even intervals similar to a comb shape, and the SRS is transmitted with resource elements which are arranged at certain frequency positions with intervals different from each other.

When using the SRS configuration (Configuration 3), it is possible to perform measurement of the channel quality and the like in the entirety of bands of the channel band while limiting a resource that is used in transmission of the SRS.

### (SRS Configuration (Configuration 4))

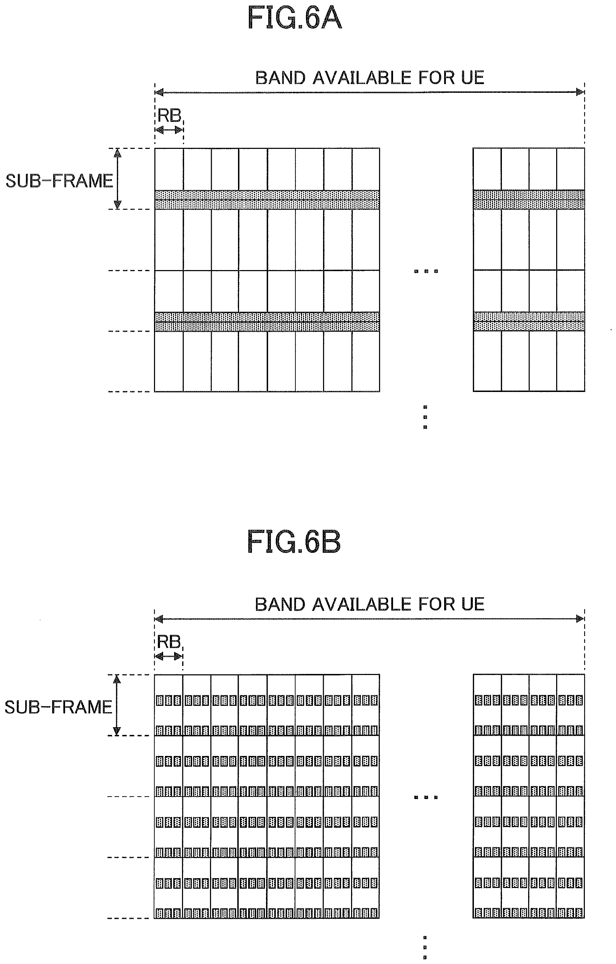

Figs. 6A and 6B are diagrams illustrating an example of the SRS configuration (Configuration 4). The SRS configuration (Configuration 4) is a configuration in which in a plurality of symbols in a sub-frame, the SRS is transmitted in the whole RB range available for the user equipment 20. The plurality of symbols may be specific continuous symbols, or symbols in locations spaced away from each other.

Fig. 6A illustrates an example in a case where in the whole RB range available for the user equipment 20, the SRS is transmitted with the entirety of resource elements or comb-like resource elements, and Fig. 6B illustrates a configuration in which the SRS is discretely transmitted in the whole RB range available for the user equipment 20.

In the SRS configuration (Configuration 4), the SRS is transmitted in a plurality of symbols in one sub-frame, and thus an overhead of the SRS increases (the amount of resources which are used increases). Here, the user equipment 20 may transmit the SRS in only a partial sub-frame. However, there is no limitation thereto, and the SRS may be transmitted in continuous sub-frames.

When using the SRS configuration (Configuration 4), it is possible to improve measurement accuracy of the channel quality and the like. In addition, the base station 10 can perform a control using a measurement result for each of the plurality of symbols in which the SRS is transmitted, and the like.

### (SRS Configuration (Configuration 5))

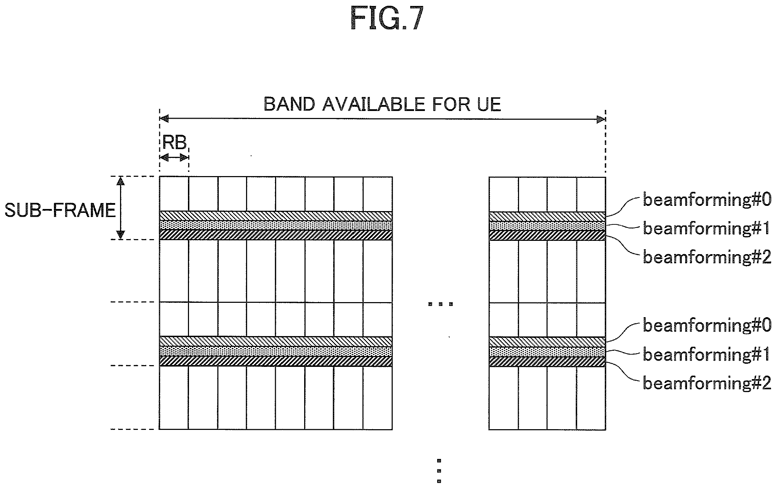

Fig. 7 is a diagram illustrating an example of the SRS configuration (Configuration 5). The SRS configuration (Configuration 5) is a configuration in which in a plurality of symbols in a sub-frame, the SRS is transmitted in the whole RB range available for the user equipment 20 similar to the SRS configuration (Configuration 4), but the SRS is transmitted by using beams different from each other for the plurality of symbols in the one sub-frame.

In 5G, in a case of using a frequency that is higher in comparison to LTE, performing of beam forming, which uses a plurality of narrow beams so as to secure coverage, has been examined. The SRS configuration (Configuration 5) is applicable to a case where beam forming using a plurality of beams is performed in the UL.

Furthermore, "transmission of the SRS by using beams different from each other" has the same meaning as "transmission of a precoded SRS".

In addition, the user equipment 20 may transmit the SRS from antenna ports different from each other for a plurality of symbols in one sub-frame. Furthermore, the antenna ports represent logical antenna ports which are defined by standard specification of 3GPP.

In the SRS configuration (Configuration 5), symbols corresponding to the number of beams are used. Accordingly, in a case where the number of beams is great, the SRS may be transmitted in the entirety of symbols in the one sub-frame. In addition, in the SRS configuration (Configuration 5), in the whole RB range available for the user equipment 20, the SRS may be transmitted with the entirety of resource elements or comb-like resource elements, or the SRS may be discretely transmitted.

When using the SRS configuration (Configuration 5), the base station 10 can measure the channel quality, the path loss, and the like for each beam in the one sub-frame.

### (SRS Configuration (Configuration 6))

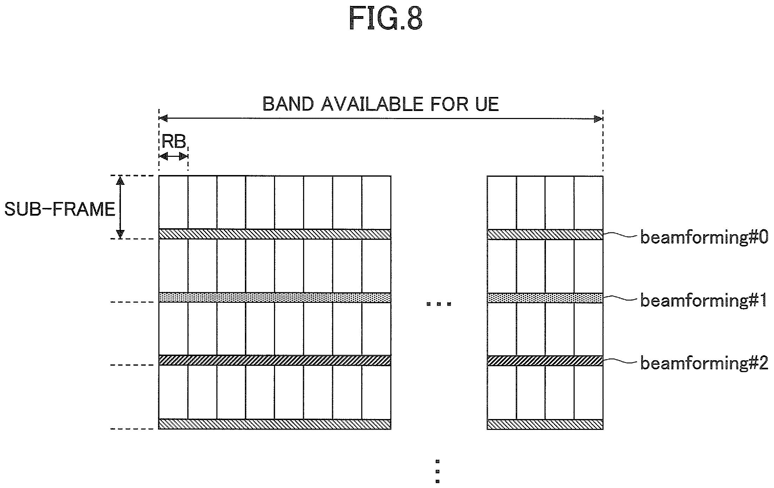

Fig. 8 is a diagram illustrating an example of the SRS configuration (Configuration 6). The SRS configuration (Configuration 6) is a configuration in which in one specific symbol in a sub-frame, the SRS is transmitted in the whole RB (resource block) range available for the user equipment 20, but the SRS is transmitted with beams different from each other for each sub-frame.

In the SRS configuration (Configuration 6), in the whole RB range available for the user equipment 20, the SRS may be transmitted with the entirety of resource elements or comb-like resource elements. That is, with regard to the SRS configuration (Configuration 1), the SRS may be transmitted with beams different from each other for each sub-frame. In addition, in the SRS configuration (Configuration 6), the SRS may be discretely transmitted in the whole RB range available for the user equipment 20. That is, with regard to the SRS configuration (Configuration 3), the SRS may be transmitted with beams different from each other for each sub-frame. In addition, the user equipment 20 may transmit the SRS from antenna ports different from each other for each sub-frame.

When using the SRS configuration (Configuration 6), the number of symbols in which the SRS is transmitted in one sub-frame is limited. Accordingly, in a case of transmitting the SRS by using the beam forming, it is possible to further reduce an overhead of the SRS transmission in comparison to the SRS configuration (Configuration 5) .

### (Supplement)

In a case of using the OFDM in a waveform of the UL, it is possible to apply the entirety of the SRS configurations described above. On the other hand, in a case of using the DFT-s-OFDM in the waveform of the UL, the base station 10 gives only an SRS configuration, in which transmission resources (including comb-like resources) in a frequency direction are continuous, in instruction to the user equipment due to restriction of the DFT-s-OFDM.

According to the above-described SRS configurations (Configuration 1) to (Configuration 6), it is possible to define an SRS configuration suitable for a case where the waveform of the UL is either the OFDM or the DFT-s-OFDM. In addition, according to the SRS configurations (Configuration 5) and (Configuration 6), it is possible to define an SRS configuration suitable for a case of performing the beam forming in the UL.

### <With Respect to Suppression of Interference between Adjacent Cells>

In a case where a TDD mode is used in own cell and an adjacent cell, the frequencies of an UL and a DL become the same as each other. Accordingly, it is necessary for a radio resource with which the SRS is transmitted in the own cell, and a radio resource with which a downlink reference signal (Cell-specific Reference Signal (CRS), Channel State Information-Reference Signal (CSI-RS), etc.) is transmitted in the adjacent cell not to overlap each other. The reason for this is as follows. When the radio resources overlap each other, SRS reception quality in the own cell may deteriorate due to a transmission power difference between transmission power of the SRS and transmission power of the downlink reference signal.

Here, the base station 10 may acquire a transmission resource position of a reference signal in a downlink (DL) of the adjacent cell from another base station 10, and may determine the SRS configuration so that the radio resource with which the SRS is transmitted in the cell and the radio resource with which the downlink reference signal (CRS, CSI-RS, and the like) is transmitted in the adjacent cell do not overlap each other.

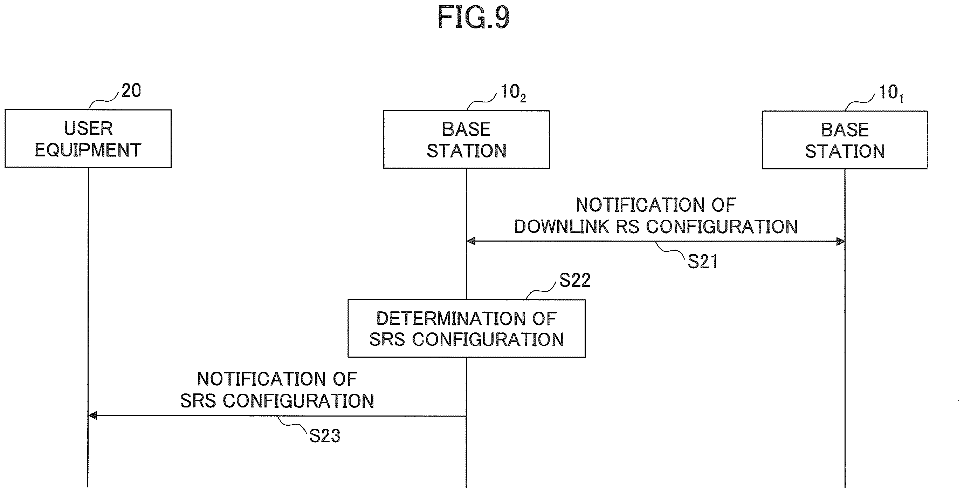

Fig. 9 is a sequence diagram illustrating an example of a procedure of determining the SRS configuration on the basis of a DL reference signal configuration of the adjacent cell. In Fig. 9, a base station 10₁, and a base station 10₂ are base stations which constitute cells adjacent to each other. In addition, in Fig. 9, the base station 10₂ is illustrated to perform operations in step S22 and step S23 for convenience. However, the base station 10₁ and the base station 10₂ have the same function, and can respectively perform the same operation.

In step S21, the base station 10₁ and the base station 10₂ give a notification of a transmission resource position of a reference signal in a DL (RS configuration of the DL) through an X2 interface. In step S22, the base station 10₂ determines an SRS configuration, which is given in instruction to the user equipment 20 of own cell, on the basis of the RS configuration of the DL in an adjacent cell (base station 10₁). In step S23, the base station 10₂ notifies the user equipment 20 of the SRS configuration that is determined.

According to the above-described procedure, even in a case where the TDD mode is used, it is possible to prevent from SRS reception quality from deteriorating in the own cell.

### <Functional Configuration>

Description will be given of a functional configuration example of the base station 10 and the user equipment 20 which execute the above-described embodiment. The base station 10 and the user equipment 20 according to this embodiment may be provided with a function of executing the entirety of SRS configuration methods (Method 1) to (Method 6), or may be provided with a function of executing a part thereof.

### (Base Station)

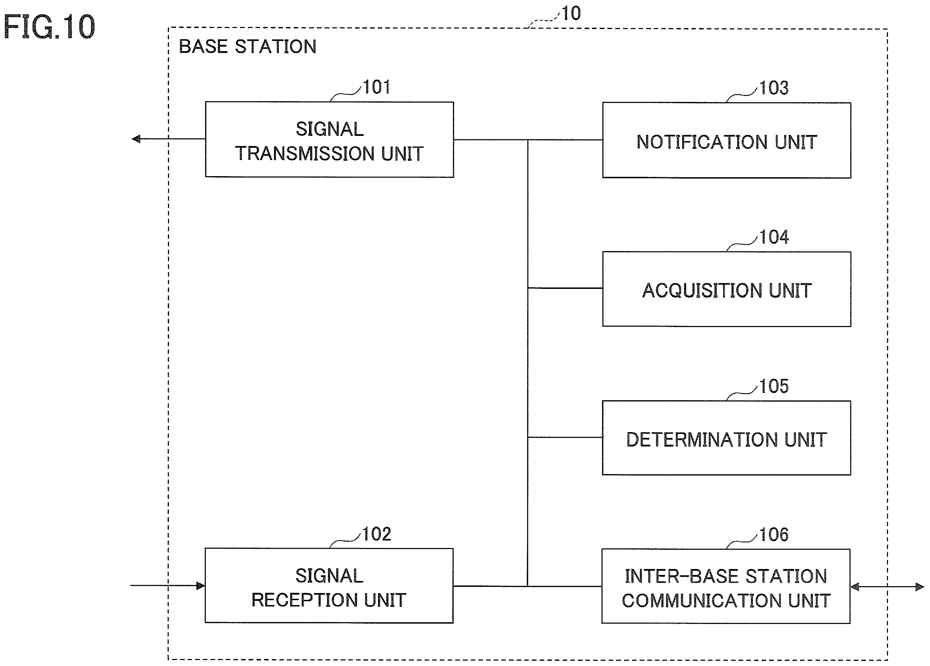

Fig. 10 is a diagram illustrating an example of a functional configuration of a base station according to the embodiment. As illustrated in Fig. 10, the base station 10 includes a signal transmission unit 101, a signal reception unit 102, a notification unit 103, an acquisition unit 104, a determination unit 105, and an inter-base station communication unit 106. Furthermore, Fig. 10 illustrates only functional units which are particularly related to the embodiment of the invention in the base station 10. In addition, the functional configuration illustrated in Fig. 10 is illustrative only. A functional classification or the name of the functional units may be arbitrarily set as long as the operation according to this embodiment can be executed.

The signal transmission unit 101 includes a function of creating various signals of a physical layer from a signal of a higher layer to be transmitted from the base station 10, and wirelessly transmitting the signals. The signal reception unit 102 includes a function of wirelessly receiving various signals from the user equipment 20, and acquiring a signal of a further higher layer from a signal of a physical layer which is received.

The notification unit 103 has a function of notifying the user equipment 20 of an uplink reference signal configuration of an uplink reference signal that is transmitted from the user equipment 20. The acquisition unit 104 has a function of acquiring information, which indicates a transmission resource position of a reference signal that is used in a DL by another base station 10, from the other base station 10 through the inter-base station communication unit 106.

The determination unit 105 has a function of determining an uplink reference signal configuration, which is given in instruction to the user equipment 20, so that the transmission resource position, which is acquired by the acquisition unit 104, of the reference signal that is used in the DL by the other base station 10 and a transmission resource position at which an uplink reference signal is transmitted by the user equipment 20 do not overlap each other. In addition, the determination unit may determine the uplink reference signal configuration, which is given in instruction to the user equipment 20, by selecting an uplink reference signal configuration that is given in instruction to the user equipment 20 among a plurality of uplink reference signal configurations (for example, the SRS configuration methods (Method 1) to (Method 6)) so that the transmission resource position of the reference signal that is used in the DL by the other base station 10 and a transmission resource position at which an uplink reference signal is transmitted by the user equipment 20 do not overlap each other.

The inter-base station communication unit 106 has a function of performing a communication with the other base station 10 by using the X2 interface.

### (User Equipment)

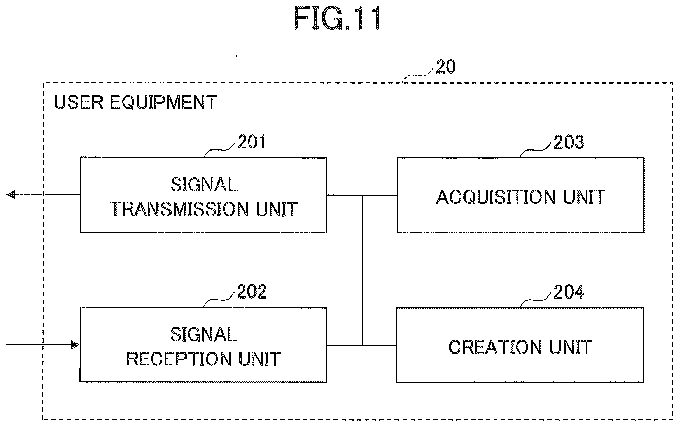

Fig. 11 is a diagram illustrating an example of a functional configuration of user equipment according to the embodiment. As illustrated in Fig. 11, the user equipment 20 includes a signal transmission unit 201, a signal reception unit 202, an acquisition unit 203, and a creation unit 204. Furthermore, Fig. 11 illustrates only functional units which are particularly related to the embodiment of the invention in the user equipment 20. In addition, the functional configuration illustrated in Fig. 11 is illustrative only. A functional classification or the name of the functional units may be arbitrarily set as long as the operation according to this embodiment can be executed.

The signal transmission unit 201 includes a function of creating various signals of a physical layer from a signal of a higher layer to be transmitted from the user equipment 20, and wirelessly transmitting the signal. The signal reception unit 202 includes a function of wirelessly receiving various signals from the base station 10, and acquiring a signal of a further higher layer from a signal of a physical layer which is received.

In addition, the signal transmission unit 201 has a function of transmitting an uplink reference signal that is created by the creation unit 204. In addition, the signal transmission unit 201 may transmit the uplink reference signal, which is created by the creation unit 204, with beams different from each other for a predetermined time region (for example, one sub-frame). In addition, the signal transmission unit 201 may transmit the uplink reference signal, which is created by the creation unit 204, with beams different from each other for a plurality of symbols in the predetermined time region. Furthermore, "beams" may be referred to as "transmission weights", "precoding vectors (precoding weights), and the like. That is, the signal transmission unit 201 may transmit the uplink reference signal, which is created by the creation unit 204, with transmission weights different from each other for the predetermined time region (or may transmit after multiplication with precoding vectors different from each other for the predetermined time region). In addition, the signal transmission unit 201 may transmit the uplink reference signal, which is created by the creation unit 204, with transmission weights different from each other for a plurality of symbols in the predetermined time region (or may transmit after multiplication with precoding vectors different from each other for the plurality of symbols in the predetermined time region).

The acquisition unit 203 has a function of acquiring the uplink reference signal configuration of the uplink reference signal, which is transmitted by the user equipment 20, from the base station 10. In a case where the reference signal configuration is determined on the basis of the specifications, the processing of the acquisition unit 203 is omitted.

The creation unit 204 has a function of creating the uplink reference signal in accordance with a predetermine uplink reference signal configuration that is given in notification from the base station. In addition, the creation unit 204 has a function of creating an uplink reference signal having an uplink reference signal configuration in which in one symbol in the predetermined time region (for example, in one sub-frame), frequency resources with which the uplink reference signal is to be transmitted are discretely mapped in a frequency direction. In addition, the creation unit 204 has a function of creating an uplink reference signal having an uplink reference signal configuration in which in a plurality of symbols in the predetermined time region (for example, in one sub-frame), frequency resources with which the uplink reference signal is to be transmitted are continuously or discretely mapped in a frequency direction.

### <Hardware Configuration>

The block diagrams (Fig. 10 and Fig. 11) which are used in description of the embodiment illustrate blocks of a function unit. The functional blocks (constituent units) are realized by an arbitrary combination of hardware and/or software. In addition, means for realizing respective functional blocks is not particularly limited. That is, the respective function blocks may be realized by one device in which a physical combination and/or a logical combination are made. In addition, two or greater devices, which are physically and/or logically separated from each other, may be directly and/or indirectly (for example, wire and/or wirelessly) connected, and the respective function blocks may be realized by a plurality of the devices.

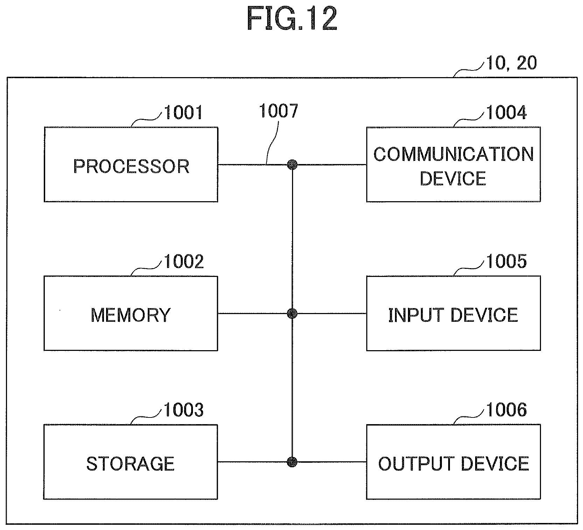

For example, the base station 10, the user equipment 20, and the like in the embodiment of the invention may function as a computer that performs processing of the reference signal transmission method of the invention. Fig. 12 is a diagram illustrating an example of a hardware configuration of the base station and the user equipment according to the embodiment. The base station 10 and the user equipment 20 may be configured as a computer device that physically includes a processor 1001, a memory 1002, a storage 1003, a communication device 1004, an input device 1005, an output device 1006, a bus 1007, and the like.

Furthermore, in the following description, a term "device" may be substituted with a circuit, a unit, and the like. The hardware configuration of the base station 10 and the user equipment 20 may include the respective devices, which are illustrated in the drawing, one by one or in a plural number, or may not include a part of the devices.

Respective functions in the base station 10 and the user equipment 20 are realized by reading out predetermined software (program) from hardware such as the processor 1001 and the memory 1002 so as to allow the processor 1001 to perform an arithmetic operation, and by controlling a communication by the communication device 1004, and reading-out and/or input of data in the memory 1002 and the storage 1003.

For example, the processor 1001 allows an operating system to operate so as to control the entirety of the computer. The processor 1001 may be constituted by a central processing unit (CPU) that includes an interface with a peripheral device, a control device, an arithmetic operation device, a register, and the like. For example, the signal transmission unit 101, the signal reception unit 102, the notification unit 103, the acquisition unit 104, the determination unit 105, and the inter-base station communication unit 106 of the base station 10, and the signal transmission unit 201, the signal reception unit 202, the acquisition unit 203, and the creation unit 204 of the user equipment 20 may be realized by the processor 1001.

In addition, the processor 1001 reads out a program (program code), a software module, or data from the storage 1003 and/or the communication device 1004 into the memory 1002, and performs various kinds of processing according to the program, the software module, or the data. As the program, a program, which allows the computer to execute at least a part of the operations described in the embodiment, is used. For example, the signal transmission unit 101, the signal reception unit 102, the notification unit 103, the acquisition unit 104, the determination unit 105, and the inter-base station communication unit 106 of the base station 10, and the signal transmission unit 201, the signal reception unit 202, the acquisition unit 203, and the creation unit 204 of the user equipment 20 may be realized by a control program that is stored in the memory 1002 and is operated by the processor 1001. Another functional block may be realized in the same manner. The above-described various kinds of processing are described to be executed by one processor 1001, but may be simultaneously or sequentially executed by two or greater processors 1001. The processor 1001 may be mounted by one or greater chips. Furthermore, the program may be transmitted from a network through electric communication line.

The memory 1002 is a computer-readable recording medium, and may be constituted by, for example, at least one of a read only memory (ROM), an erasable programmable ROM (EPROM), an electrically erasable programmable ROM (EEPROM), a random access memory (RAM), and the like. The memory 1002 may be referred to as a register, a cache, a main memory (main storage device), and the like. The memory 1002 can retain a program (program code), a software module, and the like which can be executed to carry out the reference signal transmission method according to the embodiment of the invention.

The storage 1003 is a computer-readable recording medium, and may be constituted by at least one, for example, among an optical disc such as a compact disc ROM (CD-ROM), a hard disk drive, a flexible disk, a magneto-optical disc (for example, a compact disc, a digital multi-purpose disc, and a Blue-ray (registered trademark) disc), a smart card, a flash memory (for example, a card, a stick, a key drive), a floppy (registered trademark) disk, a magnetic strip, and the like. The storage 1003 may be referred to as an auxiliary storage device. For example, the above-described storage medium may be a database including the memory 1002 and/or the storage 1003, a server, and other appropriate media.

The communication device 1004 is hardware (transmission and reception device) that performs a communication between computers through a wire and/or a radio network, and may be referred to as, for example, a network device, a network controller, a network card, a communication module, and the like. For example, the signal transmission unit 101, the signal reception unit 102, and the inter-base station communication unit 106 of the base station 10, and the signal transmission unit 201 and the signal reception unit 202 of the user equipment 20 may be realized by the communication device 1004.

The input device 1005 is an input device (for example, a keyboard, a mouse, a microphone, a switch, a button, a sensor, and the like) that receives an input from the outside. The output device 1006 is an output device (for example, a display, a speaker, an LED lamp, and the like) that performs output to the outside. Furthermore, the input device 1005 and the output device 1006 may have an integral configuration (for example, a touch panel) .

In addition, respective devices including the processor 1001, the memory 1002, and the like are connected to each other through a bus 1007 for an information communication. The bus 1007 may be configured as a single bus, or may be configured as a bus that is different between devices.

The base station 10 and the user equipment 20 may include hardware such as a microprocessor, a digital signal processor (DSP), an application specific integrated circuit (ASIC), a programmable logic device (PLD), and a Field Programmable Gate Array (FPGA), or a part or the entirety of respective function blocks may be realized by the hardware. For example, the processor 1001 may be mounted by at least one piece of hardware.

### <Conclusion>

As described above, according to the embodiment, there is provided user equipment of a radio communication system including a base station and the user equipment. The user equipment includes: a creation unit that creates an uplink reference signal in accordance with a predetermined uplink reference signal configuration that is signaled from the base station or a predetermined uplink reference signal configuration that is defined by a specification; and a transmission unit that transmits the created uplink reference signal. In the predetermined uplink reference signal configuration, frequency resources for transmitting an uplink reference signal are mapped contiguously or discretely in a frequency direction in a plurality of symbols within a predetermined time domain. According to the user equipment 20, technology can be provided that allows transmission of a reference signal suitable for a waveform that is used in UL.

In addition, the transmission unit may transmit the created uplink reference signal with a beam that depends on the predetermined time domain. According to this, the base station 10 can measure the channel quality, the path loss, and the like for each beam in the predetermined time region. In addition, since the uplink reference signal with beams different from each other is transmitted in one symbol in the predetermined time region, even if beam forming with a plurality of beams is performed, it can be prevented that a large number of uplink reference signals are transmitted in the predetermined time domain, and a resource consumption overhead can be reduced.

In addition, according to the embodiment, there is provided user equipment of a radio communication system including a base station and the user equipment. The user equipment includes: a creation unit that creates an uplink reference signal in accordance with a predetermined uplink reference signal configuration that is signaled from the base station or a predetermined uplink reference signal configuration that is defined by a specification; and a transmission unit that transmits the created uplink reference signal. In the predetermined uplink reference signal configuration, frequency resources for transmitting an uplink reference signal are mapped contiguously or discretely in a frequency direction in a plurality of symbols within a predetermined time domain. According to the user equipment 20, technology can be provided that allows transmission of a reference signal suitable for a waveform that is used in UL.

In addition, the transmission unit may transmit the created uplink reference signal with beams that differ for the plurality of respective different symbols within the predetermined time domain. As a result, the base station 10 can measure channel quality, a path-loss, etc., for each beam within the predetermined time domain.

In addition, according to the embodiment, there is provided a base station of a radio communication system including a plurality of the base stations and user equipment. The base station includes: an acquisition unit that acquires information, which indicates a transmission resource position of a reference signal that is used by another base station in a downlink, from the other base station; and a determination unit that determines a reference signal configuration that is indicated to the user equipment so that the transmission resource position of the reference signal that is used by the other base station in the downlink is prevented from overlapping a transmission resource position at which an uplink reference signal is transmitted by the user equipment. According to the base station 10, technology can be provided that allows transmission of a reference signal suitable for a waveform that is used in UL.

In addition, according to the embodiment, there is provided a reference signal transmission method that is executed by user equipment of a radio communication system including a base station and the user equipment. The method includes: a step of creating an uplink reference signal in accordance with a predetermined uplink reference signal configuration that is signaled from the base station or a predetermined uplink reference signal configuration that is defined in a specification; and a step of transmitting the created uplink reference signal. In the predetermined uplink reference signal configuration, frequency resources for transmitting an uplink reference signal are mapped discretely in a frequency direction in one symbol within a predetermined time domain. According to the reference signal transmission method, technology can be provided that allows transmission of a reference signal suitable for a waveform that is used in UL.

### <Supplement of Embodiment>

The invention is restricted to New Radio, although what is herein disclosed may be applied to long term evolution (LTE), LTE-Advanced (LTE-A), SUPER 3G, IMT-Advanced, 4G, 5G, future radio access (FRA), W-CDMA (registered trademark), GSM(registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), other systems which use a suitable system, and/or a next generation system that is extended on the basis of the systems.

In the procedure, the sequence, the flowchart, and the like in the aspect and the embodiment which are described in this specification, the order thereof may be changed as long as inconsistency does not occur. For example, with regard to the method that is described in this specification, elements of various steps are suggested in an exemplary order, and there is no limitation to the specific order that is suggested.

Information that is input or output, and the like may be stored in a specific location (for example, a memory), or may be managed by a management table. The information that is input or output, and the like may be subjected to rewriting, updating, or additional writing. The information that is output, and the like may be deleted. The information that is input, and the like may be transmitted to other devices.

The aspect and the embodiment which are described in this specification may be used alone or in combination thereof, or may be switched and used in accordance with execution. In addition, notification of predetermined information (for example, notification of "a fact of X") is not limited to the explicit notification, and may be performed in an implicit manner (for example, notification of the predetermined information is not performed).

The terms "determining" and "deciding" used in this specification may include various operations. For example, the term "determining" and "deciding" may include regarding of judging, calculating, computing, processing, deriving, investigating, looking up (for example, looking up in a table, a database, or other data structures), or ascertaining as "determined" and "deciding, and the like. In addition, the "determining" and "deciding" may include regarding of receiving (for example, information receiving), transmitting (for example, information transmitting), input, output, or accessing (for example, accessing to data in a memory) as "determined" and "deciding," and the like. In addition, "determining" and "deciding" may include regarding of resolving, selecting, choosing, establishing, comparing, or the like as "determining" and "deciding." That is, "determining" and "deciding" may include regarding of any operation as "determined".

The reference signal may be abbreviated as RS, and may be referred to as a pilot in accordance with a standard that is applied.

The user equipment 20 may be referred to as UE, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several other suitable terms by those skilled in the art.

Description of "on the basis of" in this specification does not represent "only on the basis of" unless otherwise stated. In other words, description of "on the basis of" represents both "only on the basis of" and "at least on the basis of".

Any reference to elements using names, such as "first" and "second," as used in this specification does not generally limit the amount or order of those elements. These names can be used in this specification as a convenient way to distinguish between two or more elements. Accordingly, the reference to the first and second elements does not imply that only two elements can be adopted, or that the first element must precede the second element in some way.

In a case where "include", "including", and a modification thereof are used in this specification and the appended claims, these terms are intended as comprehensive terms similar to "including (comprising)". In addition, a term ("or") that is used in this specification and the appended claims is not intended as an exclusive logical sum.

In the entirety of the present disclosure, for example, in a case where articles such as "a", "an", and "the" are added in translation, the articles are intended to include a plural form as long as the opposite intention is not clearly indicated from the context.

Determination may be made by a value (0 or 1) represented by one bit, may be made by a Boolean value (Boolean: true or false), and may be made by comparison of numerical values (comparison with a predetermined value, for example).

Note that the terms described in this specification and/or the terms necessary for understanding of this specification may be replaced with terms having the same or similar meaning. For example, the channel and/or symbol may be signaling (signal). Furthermore, a signal may be a message.

Information, signals, and the like described in the present specification may be represented using any of various other techniques. For example, data, instructions, commands, information, signals, bits, symbols, chips, and the like mentioned in the entire description may be represented by voltage, current, electromagnetic waves, magnetic field or magnetic particles, optical field or photons, or any combination thereof.

The invention is described in detail above. However, it is apparent for a person ordinarily skilled in the art that the invention is not limited to the above-described embodiments in this specification. The invention can be executed a variation aspect and a modification aspect without departing from the scope of the invention which is defined by description of the claims. Accordingly, the descriptions in this specification are for the purpose of illustration and do not have any limiting meaning on the present invention.

### LIST OF REFERENCE SYMBOLS

- 10: Base station
- 20: User equipment
- 101: Signal transmission unit
- 102: Signal reception unit
- 103: Notification unit
- 104: Acquisition unit
- 105: Determination unit
- 106: Inter-base station communication unit
- 201: Signal transmission unit
- 202: Signal reception unit
- 203: Acquisition unit
- 204: Creation unit
- 1001: Processor
- 1002: Memory
- 1003: Storage
- 1004: Communication device
- 1005: Input device
- 1006: Output device

## Claims

1. User equipment (20) configured to operate in a New Radio communication system including a base station (10) and the user equipment (20), the user equipment comprising:
a creation unit (204) configured to create an uplink reference signal in accordance with a predetermined uplink reference signal configuration as reported from the base station; and
a transmission unit (201) configured to transmit the created uplink reference signal,
wherein the predetermined uplink reference signal configuration is adapted to configure, for transmitting the uplink reference signal, frequency resources discretely placed in a frequency direction in a plurality of symbols within a predetermined time domain;
**characterized in that** the transmission unit (201) is further configured to transmit the created uplink reference signal with beams that differ for the plurality of respective different symbols within the predetermined time domain.

2. A base station (10) configured to operate in a New Radio communication system including the base station (10) and a user equipment (20), the base station (10) comprising:
a transmission unit (101) configured to transmit an uplink reference signal configuration; and
a reception unit (102) that receives an uplink reference signal configured in accordance with the reference signal configuration from the user equipment (20),
wherein the uplink reference signal configuration has frequency resources for transmitting the uplink reference signal discretely placed in a frequency direction in a plurality of symbols within a predetermined time domain, and
**characterized in that** the reception unit (102) is further configured to receive the uplink reference signal with beams that differ for the predetermined time domain.

3. A reference signal transmission method to be executed by a user equipment (20) of a New Radio communication system including a base station (10) and the user equipment (20), the method comprising:
creating an uplink reference signal in accordance with a predetermined uplink reference signal configuration as reported from the base station (10); and
transmitting the created uplink reference signal,
wherein, in the predetermined uplink reference signal configuration, frequency resources for transmitting the uplink reference signal are discretely placed in a frequency direction in a plurality of symbols within a predetermined time domain, and
**characterized in that** the transmitting transmits the created uplink reference signal with beams that differ for the plurality of respective different symbols within the predetermined time domain.

## Patentansprüche

1. Benutzerendgerät (20), das konfiguriert ist, um in einem Neuen Funkkommunikationssystem betrieben zu werden, das eine Basisstation (10) und das Benutzerendgerät (20) einschließt, wobei das Benutzerendgerät Folgendes umfasst:
eine Erzeugungseinheit (204), die konfiguriert ist, um ein Uplink-Referenzsignal gemäß einer vorbestimmten Uplink-Referenzsignalkonfiguration, wie von der Basisstation gemeldet, zu erzeugen; und
eine Übertragungseinheit (201), die konfiguriert ist, um das erzeugte Uplink-Referenzsignal zu übertragen,
wobei die vorbestimmten Uplink-Referenzsignalkonfiguration angepasst ist, um zum Übertragen des Uplink-Referenzsignals Frequenzressourcen zu konfigurieren, die diskret in eine Frequenzrichtung in einer Vielzahl von Symbolen innerhalb eines vorbestimmten Zeitbereichs platziert sind;
**dadurch gekennzeichnet, dass** die Übertragungseinheit (201) weiter konfiguriert ist, um das erzeugte Uplink-Referenzsignal mit Strahlen zu übertragen, die sich von der Vielzahl von jeweils unterschiedlichen Symbolen innerhalb des vorbestimmten Zeitbereichs unterscheiden.

2. Basisstation (10), die konfiguriert ist, um in einem Neuen Funkkommunikationssystem betrieben zu werden, das die Basisstation (10) und ein Benutzerendgerät (20) einschließt, wobei die Basisstation (10) Folgendes umfasst:
eine Übertragungseinheit (101), die konfiguriert ist, um eine Uplink-Referenzsignalkonfiguration zu übertragen; und
eine Empfangseinheit (102), die ein Uplink-Referenzsignal empfängt, das gemäß der Referenzsignalkonfiguration von dem Benutzerendgerät (20) konfiguriert ist,
wobei die Uplink-Referenzsignalkonfiguration eine Frequenzressource aufweist zum Übertragen des Uplink-Referenzsignals, das in eine Frequenzrichtung in einer Vielzahl von Symbolen innerhalb eines vorbestimmten Zeitbereichs diskret platziert ist, und
**dadurch gekennzeichnet, dass** die Empfangseinheit (102) weiter konfiguriert ist, um das Uplink-Referenzsignal mit Strahlen zu empfangen, die sich von dem vorbestimmten Zeitbereich unterscheiden.

3. Referenzsignalübertragungsverfahren zur Ausführung durch ein Benutzerendgerät (20) eines Neuen Funkkommunikationssystems, das eine Basisstation (10) und das Benutzerendgerät (20) einschließt, wobei das Verfahren Folgendes umfasst:
Erzeugen eines Uplink-Referenzsignals gemäß einer vorbestimmten Uplink-Referenzsignalkonfiguration, wie von der Basisstation (10) gemeldet; und
Übertragen des erzeugten Uplink-Referenzsignals,
wobei in der vorbestimmten Uplink-Referenzsignalkonfiguration Frequenzressourcen zum Übertragen des Uplink-Referenzsignals in eine Frequenzrichtung in einer Vielzahl von Symbolen innerhalb eines vorbestimmten Zeitbereichs diskret platziert sind, und
**dadurch gekennzeichnet, dass** Übertragen das erzeugte Uplink-Referenzsignal mit Strahlen überträgt, die sich von der Vielzahl von jeweiligen Symbolen innerhalb des vorbestimmten Zeitbereichs unterscheiden.

## Revendications

1. Équipement utilisateur (20) configuré pour fonctionner dans un système de communication de nouvelle radio incluant une station de base (10) et l'équipement utilisateur (20), l'équipement utilisateur comprenant :
une unité de création (204) configurée pour créer un signal de référence en liaison montante selon une configuration de signal de référence en liaison montante prédéterminée telle que rapportée à partir de la station de base ; et
une unité de transmission (201) configurée pour transmettre le signal de référence en liaison montante créé,
dans lequel la configuration de signal de référence en liaison montante prédéterminée est conçue pour configurer, pour transmettre le signal de référence en liaison montante, des ressources de fréquence placées de manière discrète dans une direction de fréquence dans une pluralité de symboles dans un domaine temporel prédéterminé ;
**caractérisé en ce que** l'unité de transmission (201) est en outre configurée pour transmettre le signal de référence en liaison montante créé avec des faisceaux qui diffèrent pour la pluralité de symboles différents respectifs dans le domaine temporel prédéterminé.

2. Station de base (10) configurée pour fonctionner dans un système de communication de nouvelle radio incluant la station de base (10) et un équipement utilisateur (20), la station de base (10) comprenant :
une unité de transmission (101) configurée pour transmettre une configuration de signal de référence en liaison montante ; et
une unité de réception (102) qui reçoit un signal de référence en liaison montante configuré selon la configuration de signal de référence en provenance de l'équipement utilisateur (20),
dans laquelle la configuration de signal de référence en liaison montante possède des ressources de fréquence pour transmettre le signal de référence en liaison montante placées de manière discrète dans une direction de fréquence dans une pluralité de symboles dans un domaine temporel prédéterminé, et
**caractérisée en ce que** l'unité de réception (102) est en outre configurée pour recevoir le signal de référence en liaison montante avec des faisceaux qui diffèrent pour le domaine temporel prédéterminé.

3. Procédé de transmission de signal de référence qui doit être exécuté par un équipement utilisateur (20) d'un système de communication de nouvelle radio incluant une station de base (10) et l'équipement utilisateur (20), le procédé comprenant :
la création d'un signal de référence en liaison montante selon une configuration de signal de référence en liaison montante prédéterminée telle que rapportée à partir de la station de base (10) ; et
la transmission du signal de référence en liaison montante créé,
dans lequel, dans la configuration de signal de référence en liaison montante prédéterminée, des ressources de fréquence pour transmettre le signal de référence en liaison montante, sont placées de manière discrète dans une direction de fréquence dans une pluralité de symboles dans un domaine temporel prédéterminé et
**caractérisé en ce que** la transmission transmet le signal de référence en liaison montante créé avec des faisceaux qui diffèrent pour la pluralité de symboles différents respectifs dans le domaine temporel prédéterminé.
